# EUROPEAN PATENT APPLICATION

(11) **EP 4 354 544 A1**
(43) Date of publication of application: **17.04.2024**
(21) Application number: 22810617.5
(22) Date of filing: 26.05.2022
(51) Int. Cl.: H01M 4/38, H01M 4/48

(54) **ANODE ACTIVE SUBSTANCE AND PREPARATION METHOD THEREFOR, AND LITHIUM SECONDARY BATTERY PREPARED ON BASIS OF SAME**

(30) Priority: 27.05.2021 US 202163193983 P; 25.02.2022 US 202263314032 P
(71) Applicant: Sino Applied Technology Taiwan Co., Ltd., Taoyuan, Taiwan 320030 (TW)
(72) Inventor: YANG, Chih-Wei, Taoyuan, Taiwan 320030 (TW)
(74) Representative: Viering, Jentschura & Partner mbB Patent- und Rechtsanwälte
(86) International application number: PCT/CN2022/095156
(87) International publication number: WO 2022/247893

(57) **Abstract**

Provided in the embodiments of the present invention is an anode active substance for secondary batteries, which substance comprises a composite material (200). The composite material (200) includes silicon particles (210), a ceramic material (220) formed on at least some areas of the surface of the silicon particles (210), and a conductive carbon (230) composite material (200) formed on the ceramic material (220) to cover the silicon particles (210) and the ceramic material (220). In addition, further provided herein are a method for preparing an anode active substance and a lithium secondary battery (10) prepared on the basis of the anode active substance.

## Description

### Technical Field

The present invention relates to an electrode material and a preparation method therefor, and particularly to an anode active substance, a preparation method therefor, and a lithium secondary battery prepared from the anode active substance.

### Related Art

Artificial graphite and natural graphite are commonly used anode (also referred to as negative electrode) materials in lithium batteries at present. Nowadays, the capacity of a commercial graphite anode is close to its theoretical capacity (372 mAh/g). Therefore, to improve the energy density of the battery, seeking for materials with higher capacity is the next major key point.

Silicon substrate anode is a major direction in the next stage. The theoretical capacity of silicon is up to 4200 mAh/g, which is ten more times of the theoretical capacity of the existing graphite anode materials. Silicon is abundant and inexpensive, and the most promising and most preferred candidate material for use as an anode material in the next generation of lithium ion batteries. However, due to the intercalation and deintercalation of lithium into and from silicon during the charge and discharge processes, several crystal phases of different proportions are formed, causing serious volume effect. During the charge process, the expansion rate can reach 300% (while the expansion rate of the original graphite anode is only 16%). During discharge, the volume shrinks. The repeated volume changes tend to cause cracking of the silicon particles, pulverization of the materials, falling off of the electrode sheet, and other problems, resulting in a poor cycle performance.

Moreover, since the solid electrolyte interphase film (SEI film) on the anode surface is easy to be caused to break during the expansion process, and the SEI film is formed again during the discharge process. Hence, the SEI film on the silicon surface is always in a dynamic process of destruction-reconstruction. Consequently, the thickness of SEI film continues to increase, the interfacial impedance increases, and the active substance is consumed, causing degraded capacity and poorer coulombic efficiency. Since the characteristics of silicon material will cause serious volume effect during the charge and discharge processes, and also a poorer cycle performance and a poorer initial coulombic efficiency of the battery, the silicon material is difficult to be commercialized in practical application.

### SUMMARY

A new anode active substance, a preparation method therefor, and a lithium secondary battery prepared from the anode active substance are presented to solve the problems mentioned in the prior art.

The present invention provides an anode active substance for a secondary battery, which comprises a composite material. The composite material comprises a composite material of silicon particles, a ceramic material, and conductive carbon, wherein the ceramic material is formed on at least a partial area on the surface of the silicon particles, and the conductive carbon is formed on the ceramic material to cover the silicon particles and the ceramic material.

In some embodiments, the ceramic material comprises silicon carbide (SiC).

In some embodiments, the ceramic material comprises a compound synthesized from silicon, aluminum, oxygen and nitrogen.

In some embodiments, the chemical formula of the ceramic material is MₓSi₁₂₋₍ₘ₊ₙ₎Al₍ₘ₊ₙ₎OₙN₁₆₋ₙ, wherein M is at least one of the following elements or a compound thereof: yttrium (Y), zirconium (Zr), rhodium (Rh), palladium (Pd), lithium (Li), magnesium (Mg), calcium (Ca), barium (Ba), cerium (Ce), neodymium (Nd), europium (Eu), and ytterbium (Yb), x=0.01-0.5, m=0.1-2, and n=0.1-3.

In some embodiments, the composite material is in a powder shape, and a secondary particle size of the composite material is in the range of 1-500 µm.

In some embodiments, a primary particle size of the composite material is in the range of 5 nm - 1000 nm.

In some embodiments, the silicon particles comprise at least one of a spherical unit and a linear unit.

In some embodiments, the spherical unit has a diameter is in the range of 5 nm - 1000 nm, and the linear unit has a diameter is in the range of 2 nm - 40 nm.

In some embodiments, a thickness of the ceramic material is in the range of 0.1-3 nm.

In some embodiments, a thickness of the conductive carbon is in the range of 3-10 nm.

In some embodiments, the conductive carbon has one of the following structures: graphene, carbon nanotubes, and conductive carbon black.

In some embodiments, a weight percentage of the silicon particles in the composite material is at least 1%.

The present invention provides a lithium secondary battery, which comprises a cathode, a separator, and an anode. The cathode and the anode are arranged at two opposite sides of the separator, wherein the anode comprises an anode active substance, and the anode active substance comprises a composite material consisting of silicon particles, a ceramic material, and conductive carbon.

In some embodiments, the ceramic material and the conductive carbon are formed on at least a partial area on the surface of the silicon particle, and the ceramic material is positioned between the silicon particles and the conductive carbon.

In some embodiments, the weight percentage of the anode active substance in the anode is at least 70%.

The present invention provides an anode active substance for a secondary battery, comprising silicon particles formed by heating a silicon material to a plasma state, wherein the silicon material is heated in a reaction chamber filled with an organic solvent; and a composite layer of a ceramic material and conductive carbon formed on the silicon particle by the organic solvent during the process of heating.

In some embodiments, the silicon material is heated by applying a voltage of 5 kV - 20 kV to an electrode in the reaction chamber.

The present invention provides a method for preparing an anode active substance, which comprises the following steps: adding an organic solvent to a reaction chamber, wherein multiple electrodes are arranged in the reaction chamber; placing a silicon material in the reaction chamber to contact the organic solvent; and applying a voltage to the multiple electrodes, to produce a composite material containing silicon particles, a ceramic material and conductive carbon.

In some embodiments, the organic solvent comprises an alcohol compound.

In some embodiments, the organic solvent further comprises an aluminum compound.

In some embodiments, the silicon material and the organic solvent produce a silicon, aluminum, oxygen and nitrogen-based ceramic material, when a voltage is applied to the multiple electrodes.

In some embodiments, the organic solvent further comprises a flux.

In some embodiments, the flux has a composition comprising any one of the following elements or a compound thereof: yttrium, zirconium, rhodium, palladium, lithium, magnesium, calcium, barium, cerium, neodymium, europium, and ytterbium.

In some embodiments, the organic solvent further comprises at least one of a dispersant, a surfactant, a compound of group III-V element, a conductive carbon material, and a carbon precursor.

In some embodiments, the organic solvent further comprises polyvinylpyrrolidone (PVP).

In some embodiments, the concentration of the polyvinylpyrrolidone in the organic solvent is in the range of 0.01-1% by weight.

In some embodiments, the voltage applied to the multiple electrodes is in the range of 5 kV - 20 kV

In some embodiments, the method for preparing an anode active substance further comprises processing the silicon material into multiple silicon units having a strip structure.

In some embodiments, the silicon material is a silicon material doped with group III-V elements, and at least one of the silicon unit has a resistance in the range of 0.1-20 ohm.

In some embodiments, the silicon material is a silicon material undoped with group III-V elements, and at least one of the silicon unit has a resistance in the range of 5000-10000 ohm.

In some embodiments, the organic solvent comprises an alcohol compound and a compound of group III-V elements.

In some embodiments, the method for preparing an anode active substance further comprises filtering the composite material; and subjecting the filtered composite material to a heat treatment.

In some embodiments, the heat treatment comprises the following step: heating the composite material at a heating temperature of 900-1500 °C under a non-reactive environment, to produce the composite material in a powder shape.

In some embodiments, the heating temperature is in the range of 900-1200 °C.

In some embodiments, the heating temperature is in the range of 1200-1500 °C.

In some embodiments, the time for heating the composite material in the form of a slurry at a heating temperature of 900-1500 °C under a non-reactive environment is in the range of 2-5 hrs.

In some embodiments, the process of filtering comprises the following steps: subjecting the composite material to pass through a screening device; and centrifuging and separating the composite material passing through the screening device, to produce the composite material in the form of a slurry.

In some embodiments, the method for preparing an anode active substance further comprises drying the filtered composite material before the heat treatment.

In some embodiments, the drying is carried out under vacuum at an ambient temperature of 50-100 °C.

### BRIEF DESCRIPTION OF THE DRAWINGS

To describe the technical solutions in the embodiments of the present application or in the prior art more clearly and fully, hereinafter, the drawings needed to be used in the description of the embodiments or the prior art will be briefly introduced. Apparently, the drawings in the following description are only some embodiments of the present application. Other drawings can be obtained by a person of ordinary skill in the art from these accompanying drawings without creative efforts.
FIG. 1 is a schematic view showing the configuration of a lithium secondary battery according to some embodiments of the present invention;
FIG. 2 is a schematic view showing the composition of an anode material layer according to some embodiments of the present invention;
FIG. 3 is a schematic cross-sectional structural view of an anode active substance according to some embodiments of the present invention;
FIG. 4 and FIG. 5 are process flow charts showing the steps of a method for preparing an anode active substance according to some embodiments of the present invention;
FIG. 6 is specific experimental data related to battery performances of some Experimental Examples of the present invention and Comparative Examples;
FIG. 7 and FIG. 8 are transmission electron microscopy images of an anode active substance manufactured according to Experimental Example 1 in FIG. 6;
FIG. 9 is the analysis result by X-ray diffraction of an anode active substance manufactured according to Experimental Example 2 in FIG. 6;
FIG. 10 is a scanning electron microscopy image of the anode active substance manufactured according to Experimental Example 2 in FIG. 6;
FIG. 11 is the analysis result by X-ray diffraction of an anode active substance manufactured according to Experimental Example 7 in FIG. 6;
FIG. 12 and FIG. 13 are scanning electron microscopy images of an anode active substance manufactured according to Experimental Example 11 in FIG. 6;
FIG. 14 and FIG. 15 are scanning electron microscopy images of an anode active substance manufactured according to Experimental Example 12 in FIG. 6; and
FIG. 16 is specific experimental data related to expansion characteristics of some Experimental Examples of the present invention.

### DETAILED DESCRIPTION

To make the features and advantages of the present invention more comprehensible, the specific embodiments of the present invention will be described in detail in combination of the drawings. The following description contains specific information related to exemplary embodiments of the present invention. The drawings and accompanying detailed description thereof are merely exemplary embodiments. However, the present invention is not limited to these exemplary embodiments. Other variations and embodiments of the present invention will occur to those skilled in the art. Unless otherwise indicated, the same or corresponding elements in the drawings may be indicated by the same or corresponding reference numerals. Moreover, the drawings and illustrations in the present invention are generally not drawn to scale and are not intended to correspond to actual relative sizes.

For the purpose of consistency and ease of understanding, the same features are identified by reference numerals in the exemplary drawings (although not identified as such in some examples). However, the features in different implementations may be different in other aspects, so they are not restricted narrowly to the features shown in the drawings.

The terms "first," "second," "third," and others used in the specification and drawings of the present invention are used to distinguish different objects, areas, levels or steps, and not intended to describe a specific sequence (those specifically defined in claims are not limited to herein). Moreover, the terms "comprise" and any variant thereof are intended to cover a non-exclusive inclusion. The term "consisting of" is to be construed as an exclusive inclusion, which means that any additional structural configurations and/or material additions are not covered by this term. Those of ordinary skill in the art should understand that in the actual detection process, any material has the possibility of being unexpectedly contaminated or doped with trace impurities. However, these detected trace impurities have no substantial impact on the material property and/or structure defined by this term, so they are not the additional structural and/or material additions. This is explained here in advance.

The terms "connected" or "coupled" mentioned in the present invention do not define that no any spacer can exists between objects. That is, when two objects are connected or coupled to each other, it means that the two objects are directly connected/coupled to each other, or connected/coupled to each other through other objects.

In all descriptions related to specific numerical values in the present invention, although not directly indicated, they all contain the meaning of "approximately" or "substantially". That is, these specific values will cover possible range of errors of the numerical values, to reflect possible unexpected influence and deviations brought by the process or choices of materials. The range of errors of the numerical values may include changes of numerical values not significantly changing the material structure, characteristics, and effects, for example, a range of deviation of 0%-10%. This error range will be apparent to those of ordinary skill in the art.

The spatial relationship mentioned in the present invention, for example, "above," "under," "upwards," "downwards," "at the left side of," "at the right side of," and others, are all illustrative illustrations based on the relative positions presented in the drawings, and not intended to limit the configuration state of the actual material structure.

In the present invention, the anode electrode and the negative electrode are interchangeable terms, and the cathode electrode and the positive electrode are interchangeable terms.

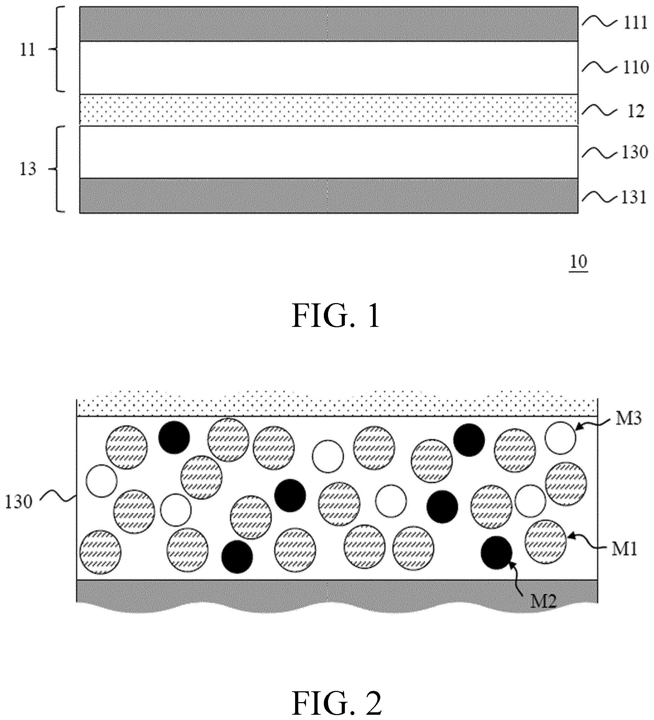

FIG. 1 is a schematic view showing the configuration of a lithium secondary battery according to some embodiments of the present invention. Referring to FIG. 1, a lithium secondary battery 10 according to this embodiment comprises a cathode 11, a separator 12, and an anode 13, wherein the cathode 11 comprises a cathode material layer 110 and a cathode current collector 111, and the anode 13 comprises an anode material layer 130 and an anode current collector 131. The cathode 11 and the anode 13 are arranged at two sides of the separator 12. More specifically, the cathode material layer 110 is arranged between the cathode current collector 111 and the separator 12 (at the upper side of the separator 12 as shown in the figure), and the anode material layer 130 is arranged between the anode current collector 131 and the separator 12 (at the lower side of the separator 12 as shown in the figure).

When the lithium secondary battery 10 is charged, lithium ions are deintercalated from the cathode material layer 110, passed through the separator 12 by the electrolyte solution, and then intercalated into the anode material layer 130; conversely, when the lithium secondary battery 10 is discharged, lithium ions are deintercalated from the anode material layer 130, passed through the separator 12 by the electrolyte solution, and then intercalated into the cathode material layer 110. At this time, because of valence balance, electrons will be output from the cathode current collector 111.

In this embodiment, the cathode material layer 110 may be formed from any feasible cathode active substance, which is not limited in the present invention. The anode material layer 130 is mainly formed from one or more anode active substances, and at least one of the anode active substances can be achieved by a composite material based on nano-silicon particles.

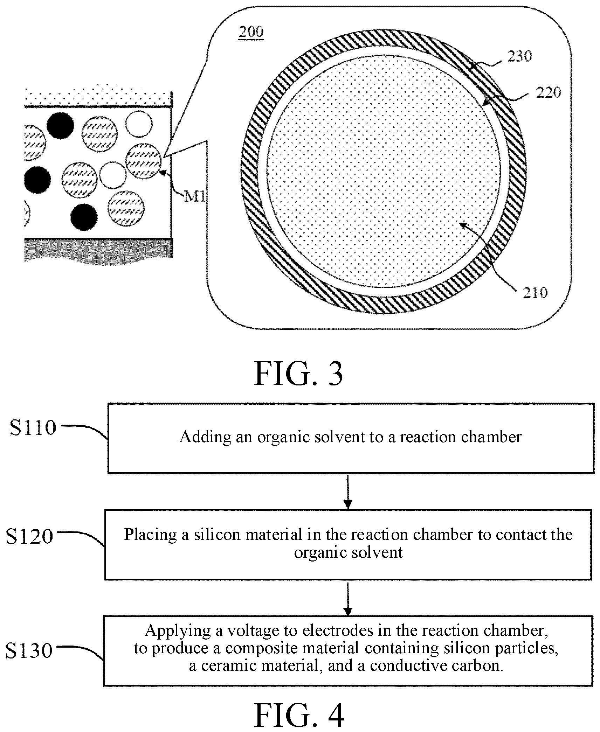

Use of the composite material based on nano-silicon particles as an anode active substance in the lithium secondary battery 10 can solve the volume effect of silicon during the charge and discharge processes, provide better charge and discharge performances and capacities, and also provide a better oxidation resistance. The composition of the anode material layer 130 and the specific structure of the composite material are further illustrated below with reference to FIG. 2 and FIG. 3. FIG. 2 is a schematic view showing the composition of an anode material layer according to some embodiments of the present invention. FIG. 3 is a schematic cross-sectional structural view of an anode active substance according to some embodiments of the present invention.

Referring to FIG. 2 and FIG. 3 at the same time, the anode material layer 130 in this embodiment comprises an anode active substance M1, in which the anode active substance M1 is achieved by a composite material 200 as shown in FIG. 3. Particularly, the composite material 200 comprises silicon particles 210, a ceramic material 220, and conductive carbon 230. The ceramic material 220 is formed on at least a partial area on the surface of silicon particles 210, and the conductive carbon 230 is formed on the ceramic material 220 to cover the silicon particles 210 and the ceramic material 220. In other words, the ceramic material 220 in the composite material 200 is formed between the silicon particles 210 and the conductive carbon 230, to sequentially form a three-layer structure (i.e., an arranged structure comprising sequentially, from the inside to the outside, the silicon particles 210, the ceramic material 220, and the conductive carbon 230).

From another perspective, the ceramic material 220 and the conductive carbon 230 attached thereto can be regarded as a whole; and in this case, the silicon particle 210 can be considered to be covered with a layer of ceramic material containing conductive carbon, which can be namely regarded as a two-layer structure (i.e., the sequence from the inside to the outside is the silicon particle 210 and the ceramic material comprising a carbon layer).

The silicon particles 210 in the composite material 200 are at nano-scale, which can be obtained after heating a silicon material to a plasma state. The silicon material may be, for example, a pure silicon wafer, an N-type silicon wafer or a P-type silicon wafer, which is not limited in the present invention. The particle size of the silicon particles 210 may be, for example, in the range of 2 nm - 1000 nm, and the specific size range thereof can be adjusted by modifying the process parameters. For example, in some embodiments, the particle size of silicon particles may be less than 150 nm, to reduce the volume effect during the charge and discharge processes.

In addition, depending on different process conditions, the silicon particles 210 may be a spherical unit or a linear unit, wherein a diameter of the spherical unit is in the range of 5 nm - 1000 nm, and a diameter of the linear unit is in the range of 2 nm - 40 nm. It should be noted that, no matter the silicon particles 210 is in a spherical shape or in a linear shape, the composite material 200 will all have a three-layer structure at the radial cross section similar to that shown in FIG. 3.

The ceramic material 220 in the composite material 200 may be, for example, silicon carbide (SiC) or a compound synthesized by silicon, aluminum, oxygen, and nitrogen, such as sialon (SiAlON) ceramics. The ceramic material 220 is formed on the surface of silicon particles 210, and a thickness thereof is, for example, in the range of 0.1-3 nm, wherein the ceramic material 220 is formed by an organic solvent after heated in a reaction chamber when the silicon material is subjected to a plasma treatment. By forming the ceramic material 220 on the silicon particles 210, the expansion of anode due to repeated charge and discharge of the lithium secondary battery can be reduced.

In an embodiment where the ceramic material 220 is silicon carbide, the combined thickness thereof may be, for example, 0.1-0.5 nm. In some embodiments, silicon carbide attached to the silicon particles 210 may be obtained by adding an organic solvent containing an alcohol compound when the silicon material is subjected to a plasma treatment. The preparation method will be specifically described in examples provided hereinafter.

In an embodiment where the ceramic material 220 is sialon ceramic, the ceramic material 220 may be α-sialon, β-sialon or O-sialon, wherein the chemical formulae of β-sialon and O-sialon are respectively Si_{(6-z)}Al_{z}O_{z}N_{(8-z)} and Si_{(2-z)}Al_{z}O_{(1+z)}N_{(2-z)}. The value of z in the chemical formulae of β-sialon and O-sialon is in the following range: z=0-4.2.

The chemical formula of α-sialon may be, for example, MₓSi₁₂₋₍ₘ₊ₙ₎Al₍ₘ₊ₙ₎OₙN₁₆₋ₙ, in which M may be at least one of the following elements or a compound thereof:
transition elements: yttrium (Y), zirconium (Zr), rhodium (Rh), and palladium (Pd); alkali metal element: lithium (Li); alkali earth metal elements: magnesium (Mg), calcium (Ca), and barium (Ba); and lanthanide elements: cerium (Ce), neodymium (Nd), europium (Eu), and ytterbium (Yb). In the chemical formula of α-sialon, the values of x, m, n are in the following ranges: x=0.01-0.5; m=0.1-2; n=0.1-3. In some embodiments, sialon ceramic attached to the silicon particles 210 may be obtained by adding an organic solvent containing an alcohol compound and an aluminum compound when the silicon material is subjected to a plasma treatment. The preparation method will be specifically described in examples provided hereinafter.

In the embodiments described above, no matter the ceramic material 220 is silicon carbide or sialon ceramic, as compared with the existing anode active substance, the expansion rate can all be effectively suppressed. Moreover, since sialon ceramic has a high hardness, a high toughness, a low thermal expansion coefficient, and a good heat shock resistance, as compared with silicon carbide, it can further inhibit the expansion rate.

Depending on different process conditions, the conductive carbon 230 in the composite material 200 may be performed by various structures such as graphene, carbon nanotubes or conductive carbon black and attached to the ceramic material 220, wherein the conductive carbon may be, for example, Super-P, acetylene black, Ketjenblack, channel black, furnace black, lamp black, thermal black, nanohorn, or vapor-deposited carbon, which is not limited in the present invention. In some embodiments, a thickness of the conductive carbon 230 is in the range of 3-10 nm. By forming the conductive carbon 230 on the ceramic material 220, the oxidation of silicon particles 210 can be further inhibited or prevented.

The structures of various layers of the smallest unit particles (i.e., the primary particles) of the composite material 200 have been described above. It can be seen that the particle size of the smallest unit particles of the composite material 200 is in the range of about 5 nm - 1000 nm. In some embodiments, the weight percentage of the silicon particles 210 in the composite material 200 is at least 1%. Here, it refers to the weight percentage of the silicon particles 210 in the corresponding smallest unit particles.

It should be noted that, as shown in the figure, the silicon particle 210 is completely covered by the ceramic material 220, and the ceramic material 220 is completely covered by the conductive carbon 230. However, in the practical material preparation process, defects may be present in the formation of crystals of individual materials, causing that the silicon particle 210 and/or the ceramic material 220 are only partially covered by the outer-layer material. For example, the silicon particle 210 may only have a partial area thereof covered by the conductive carbon 230, or exposed; and a partial area of the ceramic material 220 may be exposed. In other words, the structure of the composite material 200 defined in the present invention is not limited to the inner-layer material that is completely covered by the outer-layer material, as long as at least an area on the surface of the silicon particle 210 that can be observed is covered by the ceramic material 220, and the ceramic material of this area is further covered by the conductive carbon 230. That is, the ceramic material 220 is formed on at least a partial area on the surface of silicon particles 210, and the conductive carbon 230 is formed on the ceramic material 220 to cover the silicon particles 210 and the ceramic material 220, which falls within the scope of structure of the composite material 200 defined in the present invention.

In some embodiments, the final form of the prepared composite material 200 may be in a powder shape, which means there is a cohesive force between the smallest unit particles of the composite material 200, so that a plurality of the smallest unit particles are agglomerated to form an aggregate, and this aggregate is powder particles. The particle size of the powder particles (or the particle size of the aggregate) is in the range of 1-500 µm. More specifically, in this embodiment, the anode active substance M1/composite material 200 has a primary particle size and a secondary particle size (aggregate particle size), wherein the particle size of the smallest unit particles is the primary particle size (5 nm - 1000 nm) of the anode active substance M1/composite material 200, and the particle size of the powder particles/aggregate is the secondary particle size (1-500 µm) of the anode active substance M1/composite material 200.

In some embodiments, the final form of the prepared composite material 200 may be a suspension in a solution, which means there is no cohesive force between some of the smallest unit particles of the composite material that is sufficient to allow a plurality of the smallest unit particles to agglomerate into an aggregate. Therefore, the particle size of the anode active substance M1/composite material 200 refers to the primary particle size (5 nm - 1000 nm).

In some embodiments, the anode material layer 130 further comprises a conductive material M2, wherein the conductive material M2 may be any material that is conductive and will not cause chemical changes in the battery, such as graphite (including artificial graphite or natural graphite), conductive carbon black, conductive fibers, conductive metal oxides or polyphenyl derivatives, and other conductive materials.

In some embodiments, the anode material layer 130 may further comprise a binder M3 for improving the bonding force with the separator 12 and the anode current collector 131. In some embodiments, the anode material layer 130 may further comprise a filler.

In some embodiments, the weight percentage of the anode active substance M1 in the weight of the anode 130 is about 70-80%, the weight percentage of the conductive material M2 in the weight of the anode 130 is about 10-20% of, and the weight percentage of the binder M3 in the weight of the anode 130 is about 0-10%.

Specifically, through the silicon material nanoparticulated and covered by the ceramic material 220 and the conductive carbon 230 to increase the conductivity, the conductivity of the silicon material is thus enhanced. By means of nanoparticulation, the particle size is reduced and thus beneficial to the stress release, thereby weakening the volume effect. Therefore, when the composite material 200 based on nano-silicon is used as the anode active substance M1 of the lithium secondary battery 10, the anode 13 will still expand but not tend to break during the charge and discharge processes, which can thus improve the cycle performance. Meanwhile, the silicon material may be doped with group III-V elements, to reduce the resistance of the original silicon material and improve the electrical conductivity of the material.

Moreover, since the silicon material is a semiconductor, by covering the conductive carbon 230 in various forms, for example, graphene, carbon nanotubes, and nanohorns, the conductivity of the silicon particles 210 can be improved, the rate performance is elevated, and the agglomeration of nano-silicon particles 210 is prevented. The complete covering by the conductive carbon 230 can reduce the direct contact between the silicon material and the electrolyte solution, inhibit the overgrowth of the SEI film, stabilize the interface, and improve the coulombic efficiency.

On the other hand, by controlling the process conditions, the silicon particles 210 in the composite material 200 may form a one-dimensional nano-silicon wire (i.e., a linear unit), wherein the nano-silicon wire would expand in the axial direction (along the direction of the silicon wire), to have the stress well released and prevent the nano-silicon wire from cracking or breakage of. Therefore, the expansion effect is effectively reduced, and the powdering of the electrode is prevented. The battery failure caused by peeling off of the anode material layer 130 from the surface is avoided, thereby extending the cycle life of the battery.

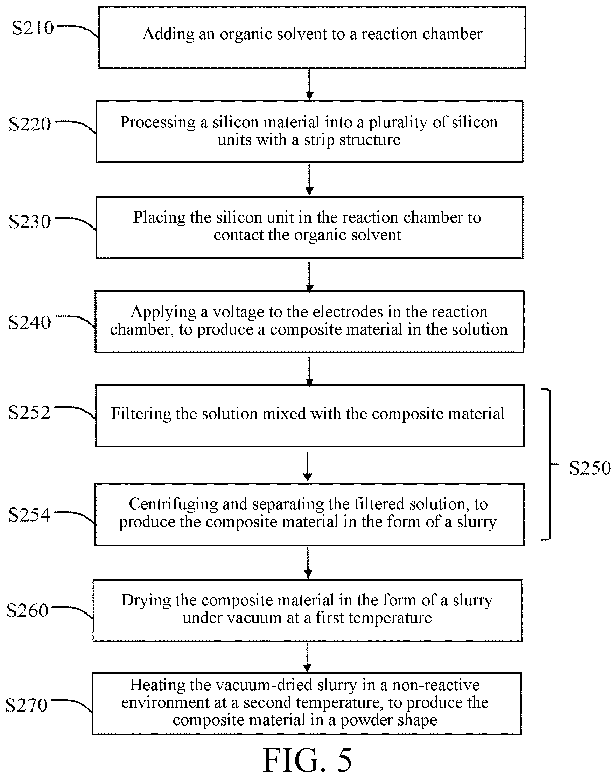

FIG. 4 and FIG. 5 are process flow charts showing the steps of a method for preparing an anode active substance according to some embodiments of the present invention. Referring to FIG. 4 firstly, in this embodiment, the method for preparing an anode active substance comprises the following steps: adding an organic solvent to a reaction chamber, wherein multiple electrodes are arranged in the reaction chamber (Step S110); placing a silicon material in the reaction chamber to contact the organic solvent (Step S120); and applying a voltage to the multiple electrodes, to produce a composite material containing silicon particles (e.g., 210), a ceramic material (e.g., 220), and a conductive carbon (e.g., 230) (Step S130).

In Step S110, according to the target produced structure of the anode active substance, the organic solvent added to the reaction chamber may be an alcohol compound solvent (such as methanol, ethanol, and isopropanol IPA), a mixed organic solvent comprising an alcohol compound and an aluminum compound, or a mixed organic solvent comprising an alcohol compound, an aluminum compound, and a flux. The aluminum compound may be, for example, aluminum chloride, aluminum sulfate, and aluminum nitrate, etc. In some embodiments, the composition of the flux comprising any one of the following elements or a compound thereof: yttrium, zirconium, rhodium, palladium, lithium, magnesium, calcium, barium, cerium, neodymium, europium, and ytterbium. For example, the flux may be, for example, yttrium nitrate, barium nitrate, and lithium hydroxide, etc.

Moreover, the organic solvent may further contain a dispersant, a surfactant, a compound of group III-V element, a conductive carbon material or a carbon precursor.

The dispersant is, for example, polyvinylpyrrolidone (PVP), which may be used to prevent the produced nano-silicon composite material from coagulation and precipitation. In some embodiments, the concentration of the PVP in the organic solvent is in the range of 0.01-1% by weight. In some embodiments, when the concentration of the PVP in the organic solvent is 0.01-0.7% by weight, a better effect can be achieved.

The compound of group III-V element may be, for example, boric acid, phosphoric acid, etc. In some embodiments, the concentration of the compound of group III-V element in the organic solvent is in the range of 0.001%-5% by weight. By adding the compound of group III-V element, the anode nano-silicon particles may be modified during the reaction process, to reduce the resistance of the material, thereby increasing the capacity of the lithium secondary battery.

The conductive carbon material may be the same material as the conductive carbon 230. The carbon precursor can be introduced into the reaction chamber in a gaseous state and mixed with the organic solvent, wherein the gaseous carbon precursor can further control the pattern of the produced carbon layer, such as carbon covering with high specific area of graphene and carbon nanotubes, to form a composite of super-highly conductive carbon, silicon carbide thin layer, and silicon material.

In Step S120, the silicon material used for preparing the anode active substance may be a pure silicon wafer, an N-type silicon wafer or a P-type silicon wafer. If a pure silicon wafer is selected as the silicon material, the organic solvent in Step S110 contains, in addition to the alcohol compound, at least additionally added compound of group III-V element. If an N-type or P-type wafer is used as the silicon material, the doping amount of group III-V element may be optionally in the range of 0.001-2% by weight.

In some embodiments, the silicon material placed in the reaction chamber may be processed into multiple silicon units having a strip structure, for example, in a wire or a rod shape comprising an inorganic material, wherein the inorganic material comprises one or more of silicon, silicon powders, mixed powders of silicon and other metals, a mixture of silicon and an inorganic matter, a silicon alloy, a silicon wafer, and waste slurry in silicon engineering, which is not limited in the present invention.

In an embodiment in which a pure silicon wafer undoped with group III-V element is used as the silicon material, the resistance value of the processed silicon unit (or referred to as a silicon rod) is in the range of 5000-10000 ohms. In an embodiment in which an N-type or P-type silicon wafer is used as the silicon material, the resistance value of the silicon unit is in the range of 0.1-20 ohms.

In Step S130, the voltage applied to the electrodes may be, for example, in the range of 5 kV - 20 kV, so that the electrode heats the silicon material in the reaction chamber in response to the applied voltage, so as to complete the plasma treatment. In the process of forming nano-silicon particles by the plasma treatment, the reaction with the organic solvent takes place simultaneously to produce the ceramic material and conductive carbon layer on silicon particles.

During the reaction with the organic solvent, the specific type of the ceramic material produced on silicon particles depends on the composition of the organic solvent. For example, if the organic solvent only contains an alcohol compound, when a voltage is applied to the electrode, the silicon material reacts with the organic solvent to produce silicon carbide as the ceramic material. If the organic solvent is a mixed organic solvent containing an alcohol compound and an aluminum compound, when a voltage is applied to the electrode, the silicon material reacts with the organic solvent to produce sialon ceramic based on silicon, aluminum, oxygen, and nitrogen.

From aspect of the preparation process, the produced anode active substance can be regarded as comprising silicon particles formed by heating the silicon material to a plasma state, wherein the silicon material is heated by being placed in a reaction chamber filled with an organic solvent; and a composite layer of a ceramic material and conductive carbon formed on the silicon particle by the organic solvent during the process of heating.

More specifically, in the Steps S110 to S130, a voltage of 5 kV - 20 kV is applied to the silicon material through the electrode and the organic solvent in the reaction chamber. In particular, after a capacitor of a high-voltage charger is charged, the connected electrode switch would be discharged simultaneously, so that the silicon material would be heated to a plasma state. The resistivity of the silicon material increases due to the rising temperature so as to allow the energy consumption to be focused on the silicon material, to finally form nano-silicon particles. At the same time, plasma is generated instantaneously, and due to the gasification and condensation resistant to heating, a ceramic material is bound, and a conductive carbon layer is formed.

Preparing an anode active substance based on the above preparation method can obtain a composite material having uniform powders, and the process is simple. Except for the organic solvent, silicon, and dispersant, basically no chemicals are added, so there are few by-products and wastes. Moreover, because the preparation method can complete the process of gasification and eliminating the plasma formation within tens of microseconds, even if the energy were actually consumed due to the initial high voltage and instantaneous large current is 2-5 times of the energy for the gasification of silicon, the energy consumption in producing the particles can still be greatly reduced, and a large-scale production can be achieved simply at a low cost. Furthermore, particles of the nano-silicon composite material produced by the preparation method are dispersed among the organic solvent when produced. Therefore, the presented preparation method is simple to use and will not be discharged into the atmosphere to cause pollution, which is relatively clean, and causes no harm to the environment and human.

FIG. 5 is used in the following description to further illustrate an exemplary implementation of detailed steps of the method for preparing an anode active substance. Referring to FIG. 5, the method for preparing an anode active substance in this embodiment comprises the following steps: adding an organic solvent to a reaction chamber (Step S210); processing a silicon material into a plurality of silicon units with a strip structure (Step S220); placing the silicon unit in the reaction chamber to contact the organic solvent (Step S230); applying a voltage to the electrodes in the reaction chamber, to produce a composite material in the solution (Step S240); filtering the composite material (Step S250); drying the filtered composite material (Step S260); and subjecting the dried composite material to a heat treatment, to generate the final composite material in a powder shape (Step S270).

Specifically, after subjected to Steps S210 to S240, the composite material has been basically produced, but is still mixed in the solution. Through the subsequent Steps S250 to S270, the composite material is further separated as the anode active substance.

In some embodiments, Step S250 may further comprise the following steps: subjecting the composite material to pass through a screening device, to filter the solution mixed with the composite material (Step S252); and centrifuging and separating the composite material passing through the screening device, to produce the composite material in the form of a slurry (Step S254). Among this, the screening device may be, but not limited to, for example, a steel mesh in the present invention.

After subjected to the centrifugation, in the drying of Step S260, the drying may be carried out by drying the composite material in the form of a slurry under vacuum at a first temperature, wherein the first temperature may be, for example, in the range of 50-100 °C.

Next, in the heat treatment of Step S270, the heat treatment may be carried out by heating the vacuum-dried slurry in a non-reactive environment at a second temperature, wherein the second temperature may be, for example, in the range of 900-1500 °C. In some embodiments, the heating time in Step S270 may be in the range of 2-5 hrs. After subjected to the heat treatment, a powdery composite material may be separated, wherein the particle size of the composite material powders (i.e., the secondary particle size of the composite material) is in the range of 1-500 µm.

In addition, depending on the heating temperature, the nano-silicon particles may be formed into a spherical structure or linear structure. In some embodiments, when the second temperature is in the range of 900-1200 °C, the silicon particles will be formed into a spherical unit; and when the second temperature is in the range of 1200-1500 °C, the silicon particles will be formed into a linear unit.

It should be noted that, depending on the selection of the second temperature, the silicon material may not be formed into the spherical units or linear units completely in the process of forming the nano-silicon particles. When the selected temperature is between the two temperature ranges, the silicon material may generate some spherical units and some linear units. That is, structures such as nano-silicon powders and nano-silicon wires may exist in the prepared silicon particles at the same time.

In some embodiments, the drying of Step S260 may be omitted. In other words, in the process flow, the heat treatment of Step S270 may be performed directly after filtering the solution mixed with the composite material of Step 250.

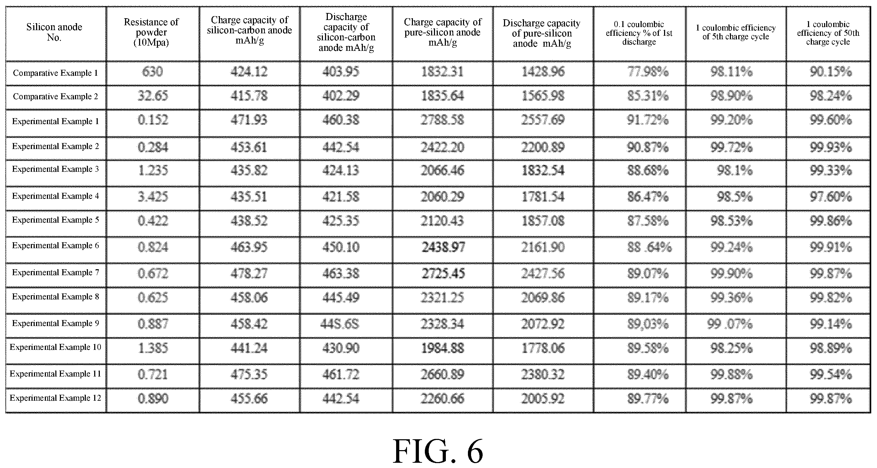

FIG. 6 is specific experimental data related to battery performances of some Experimental Examples of the present invention and Comparative Examples. Referring to FIG. 6, two Comparative Examples (Comparative Examples 1 and 2) and twelve Experimental Examples (Experimental Examples 1-12) are provided, showing that composite materials with a structure as mentioned above could be successfully obtained by the method for preparing an anode active substance according to the teachings in the present invention. Moreover, based on the characteristics of lithium secondary batteries made of the composite material obtained in the experiment, the composite material/anode active substance provided in the present invention was also confirmed to have better performances than the existing anode active substance based on silicon material.

Specifically, Comparative Example 1 shows a coin battery composed of a silicon-carbon anode active substance (model: KSC-1265) from Shinetsu Corp., in which the silicon was not the nano-silicon composite material provided in the present invention. Comparative Example 2 shows a coin battery composed of a nano-silicon material undoped by group III-V element.

On the other hand, Experimental Examples 1-5 show experimental configurations for producing silicon carbide as the ceramic material, and Experimental Examples 6-12 show experimental configurations for producing sialon ceramic as the ceramic material. The experimental conditions in Experimental Examples 6-10 were configurations set to produce nano-silicon powders, that is, the heat treatment temperature was set in the range of 900-1200 °C. The experimental conditions in Experimental Examples 11 and 12 were configurations set to produce nano-silicon wires, that is, the heat treatment temperature was set in the range of 1200-1500 °C.

In Experimental Example 1, the organic solvent in the plasma reaction chamber comprised methanol, and a pair of electrodes made of stainless steel was equipped with. An N-type silicon wafer was cut off at intervals with a thickness of 0.8 mm, a width of 1 mm, and a length of 100 mm to be manufactured as a silicon rod, wherein the resistance value of the N-type silicon rod was 2 ohm, and methane was introduced into the chamber as the coating gaseous carbon source. The nano-silicon composite material was manufactured by using a capacitor charged at a voltage of 11 kV The nano-silicon composite material covered with a carbon layer was filtered through a steel mesh, and centrifuged and separated at 11000 rpm, to obtain a slurry of nano-silicon particles.

The slurry was decomposed, dispersed, and graded after subjected to a high-temperature heat treatment under argon atmosphere at 1100 °C for 2 hrs, to prepare a nano-silicon composite material as nano-particle powders.

The nano-silicon composite material was an anode manufactured by anode active substance comprising nano-silicon powders with the weight percentage being at least 5%, with the weight percentage of the anode active substance in the entire anode after mixed with artificial graphite being 80%, the conductive material super P with the weight percentage being 10%, and the binder polyvinylidene fluoride (PVDF) with the weight percentage being 10%. The nano-silicon composite material powders as anode active substance were prepared into a coin battery having a diameter of 20 mm and a height of 3.2 mm.

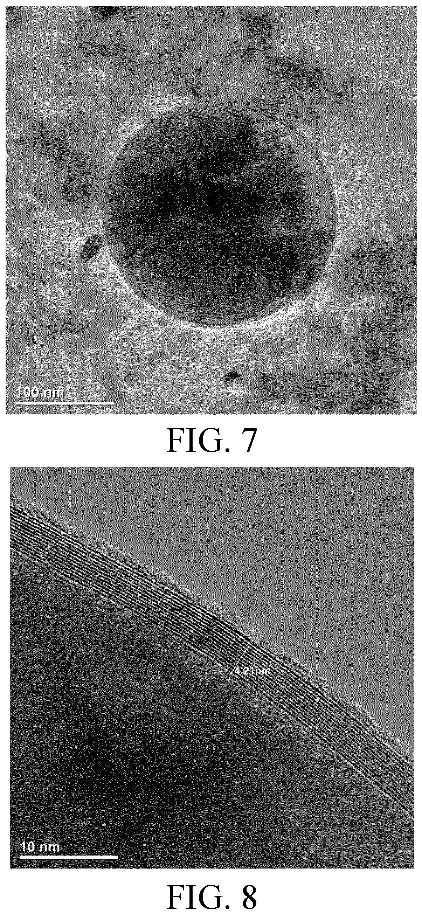

As shown in FIG. 7 and FIG. 8, where FIG. 7 and FIG. 8 are transmission electron microscope (TEM) images of an anode active substance manufactured according to Experimental Example 1 in FIG. 6, it can be observed from the TEM image of the sample obtained in Experimental Example 1 (that is, an electrode plate sample manufactured into a negative electrode of a battery), a uniform graphene coverage with a thickness of about 3-5 nm can be formed by this process.

In Experimental Example 2, the organic solvent in the plasma reaction chamber comprised isopropanol (IPA) and carbon nanotubes, and a pair of electrodes made of stainless steel was equipped with. AP-type silicon wafer was cut off at intervals with a thickness of 0.8 mm, a width of 1 mm, and a length of 100 mm to be manufactured as a silicon rod, wherein the resistance value of the P-type silicon rod was 1 ohm. The nano-silicon composite material was manufactured by using a capacitor charged at a voltage of 11kV. The nano-silicon composite material covered with a carbon layer was filtered through a steel mesh, and centrifuged and separated at 11000 rpm, to obtain a slurry of nano-silicon particles.

The slurry was decomposed, dispersed, and graded after subjected to a high-temperature heat treatment under argon atmosphere at 1100 °C for 2 hrs, to prepare a nano-silicon composite material as nano-particle powders.

The nano-silicon composite material was an anode manufactured by anode active substance comprising nano-silicon powders with the weight percentage being at least 5%, with the weight percentage of the anode active substance in the entire anode after mixed with artificial graphite being 80%, the conductive material super P with the weight percentage being 10%, and the binder PVDF with the weight percentage being 10%. The nano-silicon composite material powders as anode active substance were prepared into a coin battery having a diameter of 20 mm and a height of 3.2 mm.

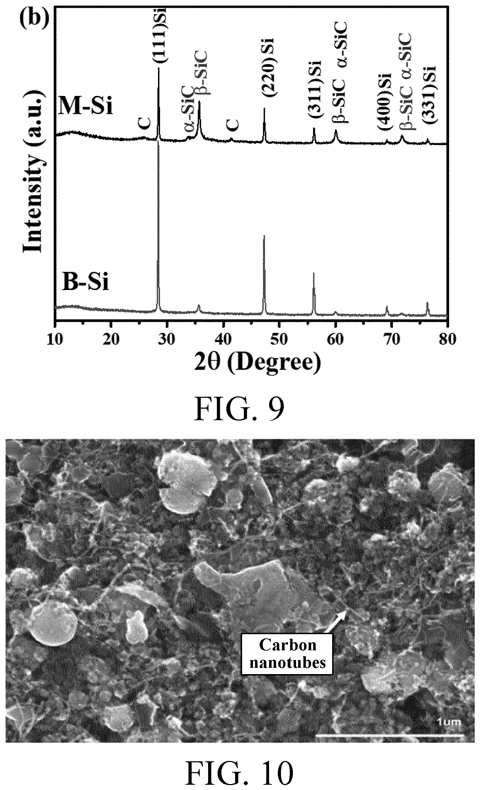

As shown in FIG. 9, where FIG. 9 is the analysis result by X-ray diffraction (XRD) of an anode active substance manufactured according to Experimental Example 2 in FIG. 6, from the analysis result by XRD of the powder (Modified-Si, M-Si) in Experimental Example 2 as compared with pure Si (Baseline-Si, B-Si), it can be confirmed that the compound silicon carbide was produced in the process.

Further, as shown in FIG. 10, where FIG. 10 is a scanning electron microscopy (SEM) image of the anode active substance manufactured according to Experimental Example 2 in FIG. 6, from the SEM image of the sample obtained in Experimental Example 2 (that is, an electrode plate sample manufactured into a negative electrode of a battery), it can be observed that through this process, uniform carbon nanotubes were formed and covered between silicon particles with good dispersity.

In Experimental Example 3, the organic solvent in the plasma reaction chamber comprised ethanol and aluminum chloride, wherein the solid content of the aluminum chloride in the solvent was 0.01%, and a pair of electrodes made of stainless steel was equipped with. AP-type silicon wafer was cut off at intervals with a thickness of 0.8 mm, a width of 1 mm, and a length of 100 mm to be manufactured as a silicon rod, where the resistance value of the P-type silicon rod was 1 ohm. The nano-silicon composite material was manufactured by using a capacitor charged at a voltage of 11 kV The nano-silicon composite material covered with a carbon layer was filtered through a steel mesh, and centrifuged and separated at 11000 rpm, to obtain a slurry of nano-silicon particles.

The slurry was decomposed, dispersed, and graded after subjected to a high-temperature heat treatment under argon atmosphere at 1100 °C for 5 hrs, to prepare a nano-silicon composite material as nano-particle powders.

The nano-silicon composite material was an anode manufactured by anode active substance comprising nano-silicon powders with the weight percentage being at least 5%, with the weight percentage of the anode active substance in the entire anode after mixed with artificial graphite being 80%, the conductive material super P with the weight percentage being 10%, and the binder PVDF with the weight percentage being 10%. The nano-silicon composite material powders as anode active substance were prepared into a coin battery having a diameter of 20 mm and a height of 3.2 mm.

In Experimental Example 4, the organic solvent in the plasma reaction chamber comprised ethanol and gallium chloride, wherein the solid content of the gallium chloride in the solvent was 0.01%, and a pair of electrodes made of stainless steel was equipped with. AP-type silicon wafer was cut off at intervals with a thickness of 0.8 mm, a width of 1 mm, and a length of 100 mm to be manufactured as a silicon rod, wherein the resistance value of the P-type silicon rod was 1 ohm. The nano-silicon composite material was manufactured by using a capacitor charged at a voltage of 11 kV The nano-silicon composite material covered with a carbon layer was filtered through a steel mesh, and centrifuged and separated at 11000 rpm, to obtain a slurry of nano-silicon particles.

The slurry was decomposed, dispersed, and graded after subjected to a high-temperature heat treatment under argon atmosphere at 1100 °C for 5 hrs for, to prepare a nano-silicon composite material as nano-particle powders.

The nano-silicon composite material was an anode manufactured by anode active substance comprising nano-silicon powders with the weight percentage being at least 5%, with the weight percentage of the anode active substance in the entire anode after mixed with artificial graphite being 80%, the conductive material super P with the weight percentage being 10%, and the binder PVDF with the weight percentage being 10%. The nano-silicon composite material powders as anode active substance were prepared into a coin battery having a diameter of 20 mm and a height of 3.2 mm.

In Experimental Example 5, the organic solvent in the plasma reaction chamber comprised ethanol and phosphoric acid, wherein the solid content of the phosphoric acid in the solvent was 0.01%, and a pair of electrodes made of stainless steel was equipped with. A P-type silicon wafer was cut off at intervals with a thickness of 0.8 mm, a width of 1 mm, and a length of 100 mm to be manufactured as a silicon rod, wherein the resistance value of the P-type silicon rod was 1 ohm. The nano-silicon composite material was manufactured by using a capacitor charged at a voltage of 11 kV The nano-silicon composite material covered with a carbon layer was filtered through a steel mesh, and centrifuged and separated at 11000 rpm, to obtain a slurry of nano-silicon particles.

The slurry was decomposed, dispersed, and graded after subjected to a high-temperature heat treatment under argon atmosphere at 1100 °C for 3 hrs, to prepare a nano-silicon composite material as nano-particle powders.

The nano-silicon composite material was an anode manufactured by anode active substance comprising nano-silicon powders with the weight percentage being at least 5%, with the weight percentage of the anode active substance in the entire anode after mixed with artificial graphite being 80%, the conductive material super P with the weight percentage being 10%, and the binder PVDF with the weight percentage being 10%. The nano-silicon composite material powders as anode active substance were prepared into a coin battery having a diameter of 20 mm and a height of 3.2 mm.

In Experimental Example 6, the organic solvent in the plasma reaction chamber comprises ethanol and aluminum chloride, wherein the solid content of the aluminum chloride in the solvent was 0.01%, and a pair of electrodes made of stainless steel was equipped with. An N-type silicon wafer was cut off at intervals with a thickness of 0.8 mm, a width of 1 mm, and a length of 100 mm to be manufactured as a silicon rod, where the resistance value of the N-type silicon rod was 0.1 ohm. The nano-silicon composite material was manufactured by using a capacitor charged at a voltage of 11 kV The nano-silicon composite material covered with a carbon layer was filtered through a steel mesh, and centrifuged and separated at 11000 rpm, to obtain a slurry of nano-silicon particles.

The slurry was decomposed, dispersed, and graded after subjected to a high-temperature heat treatment under nitrogen atmosphere at 1100 °C for 3 hrs, to prepare a nano-silicon composite material as nano-particle powders.

The nano-silicon composite material was an anode manufactured by anode active substance comprising nano-silicon powders with the weight percentage being at least 5%, with the weight percentage of the anode active substance in the entire anode after mixed with artificial graphite being 80%, the conductive material super P with the weight percentage being 10%, and the binder PVDF with the weight percentage being 10%. The nano-silicon composite material powders as anode active substance were prepared into a coin battery having a diameter of 20 mm and a height of 3.2 mm.

In Experimental Example 7, the organic solvent in the plasma reaction chamber comprised ethanol, aluminum sulfate, and yttrium nitrate, wherein the solid content of the aluminum sulfate in the solvent was 0.01%, the content of the yttrium nitrate was 0.005%, and a pair of electrodes made of stainless steel was equipped with. A P-type silicon wafer was cut off at intervals with a thickness of 0.8 mm, a width of 1 mm, and a length of 100 mm to be manufactured as a silicon rod, where the resistance value of the P-type silicon rod is 1 ohm. The nano-silicon composite material was manufactured by using a capacitor charged at a voltage of 11 kV The nano-silicon composite material covered with a carbon layer is filtered through a steel mesh, and centrifuged and separated at 11000 rpm, to obtain a slurry of nano-silicon particles.

The slurry was decomposed, dispersed, and graded after subjected to a high-temperature heat treatment under nitrogen atmosphere at 1100 °C for 3 hrs, to prepare a nano-silicon composite material as nano-particle powders.

The nano-silicon composite material was an anode manufactured by anode active substance comprising nano-silicon powders with the weight percentage being at least 5%, with the weight percentage of the anode active substance in the entire anode after mixed with artificial graphite being 80%, the conductive material super P with the weight percentage being 10%, and the binder PVDF with the weight percentage being 10%. The nano-silicon composite material powders as anode active substance were prepared into a coin battery having a diameter of 20 mm and a height of 3.2 mm.

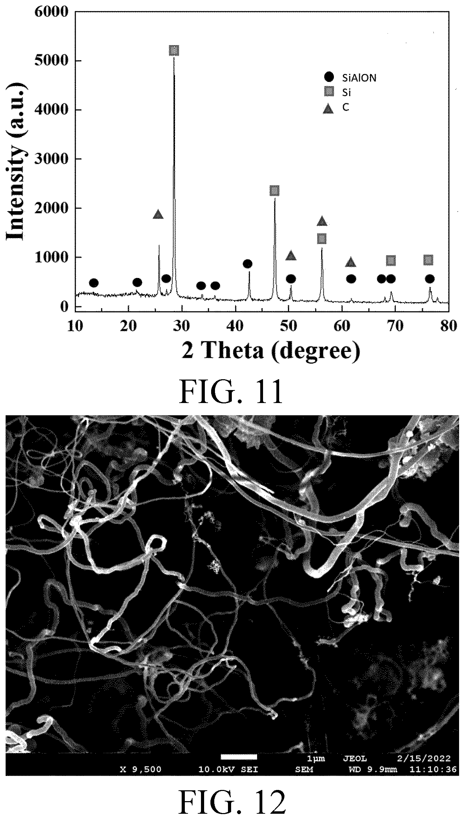

As shown in FIG. 11, where FIG. 11 is the analysis result by XRD of an anode active substance manufactured according to Experimental Example 7 in FIG. 6, from the analysis result by XRD of the powders (Modified-Si) in Experimental Example 7, it can be confirmed that sialon ceramic compound was produced in the process.

In Experimental Example 8, the organic solvent in the plasma reaction chamber comprised ethanol and aluminum sulfate, wherein the solid content of the aluminum sulfate in the solvent was 0.01%, and a pair of electrodes made of stainless steel was equipped with. AP-type silicon wafer was cut off at intervals with a thickness of 0.8 mm, a width of 1 mm, and a length of 100 mm to be manufactured as a silicon rod, wherein the resistance value of the P-type silicon rod was 1 ohm. The nano-silicon composite material was manufactured by using a capacitor charged at a voltage of 11 kV The nano-silicon composite material covered with a carbon layer was filtered through a steel mesh, and centrifuged and separated at 11000 rpm, to obtain a slurry of nano-silicon particles.

The slurry was decomposed, dispersed, and graded after subjected to a high-temperature heat treatment under nitrogen atmosphere at 1100 °C for 3 hrs, to prepare a nano-silicon composite material as nano-particle powders.

The nano-silicon composite material was an anode manufactured by anode active substance comprising nano-silicon powders with the weight percentage being at least 5%, with the weight percentage of the anode active substance in the entire anode after mixed with artificial graphite being 80%, the conductive material super P with the weight percentage being 10%, and the binder PVDF with the weight percentage being 10%. The nano-silicon composite material powders as anode active substance were prepared into a coin battery having a diameter of 20 mm and a height of 3.2 mm.

In Experimental Example 9, the organic solvent in the plasma reaction chamber comprised ethanol and aluminum nitrate, wherein the solid content of the aluminum nitrate in the solvent was 0.01%, and a pair of electrodes made of stainless steel was equipped with. AP-type silicon wafer was cut off at intervals with a thickness of 0.8 mm, a width of 1 mm, and a length of 100 mm to be manufactured as a silicon rod, wherein the resistance value of the P-type silicon rod was 1 ohm. The nano-silicon composite material was manufactured by using a capacitor charged at a voltage of 11 kV The nano-silicon composite material covered with a carbon layer was filtered through a steel mesh, and centrifuged and separated at 11000 rpm, to obtain a slurry of nano-silicon particles.

The slurry was decomposed, dispersed, and graded after subjected to a high-temperature heat treatment under nitrogen atmosphere at 1100 °C for 3 hrs, to prepare a nano-silicon composite material as nano-particle powders.

The nano-silicon composite material was an anode manufactured by anode active substance comprising nano-silicon powders with the weight percentage being at least 5%, with the weight percentage of the anode active substance in the entire anode after mixed with artificial graphite being 80%, the conductive material super P with the weight percentage being 10%, and the binder PVDF with the weight percentage being 10%. The nano-silicon composite material powders as anode active substance were prepared into a coin battery having a diameter of 20 mm and a height of 3.2 mm.

In Experimental Example 10, the organic solvent in the plasma reaction chamber comprised ethanol, aluminum chloride, and lithium hydroxide, wherein the solid content of the aluminum chloride in the solvent was 0.01%, the content of the lithium hydroxide was 0.005%, and a pair of electrodes made of stainless steel was equipped with. A P-type silicon wafer was cut off at intervals with a thickness of 0.8 mm, a width of 1 mm, and a length of 100 mm to be manufactured as a silicon rod, wherein the resistance value of the P-type silicon rod was 1 ohm. The nano-silicon composite material was manufactured by using a capacitor charged at a voltage of 11 kV The nano-silicon composite material covered with a carbon layer was filtered through a steel mesh, and centrifuged and separated at 11000 rpm, to obtain a slurry of nano-silicon particles.

The slurry was decomposed, dispersed, and graded after subjected to a high-temperature heat treatment under nitrogen atmosphere at 1100 °C for 3 hrs, to prepare a nano-silicon composite material as nano-particle powders.

The nano-silicon composite material was an anode manufactured by anode active substance comprising nano-silicon powders with the weight percentage being at least 5%, with the weight percentage of the anode active substance in the entire anode after mixed with artificial graphite being 80%, the conductive material super P with the weight percentage being 10%, and the binder PVDF with the weight percentage being 10%. The nano-silicon composite material powders as anode active substance were prepared into a coin battery having a diameter of 20 mm and a height of 3.2 mm.

In Experimental Example 11, the organic solvent in the plasma reaction chamber comprised ethanol, aluminum sulfate, and yttrium nitrate, wherein the solid content of the aluminum sulfate in the solvent was 0.05%, the content of the yttrium nitrate was 0.01%, and a pair of electrodes made of stainless steel was equipped with. A P-type silicon wafer was cut off at intervals with a thickness of 0.8 mm, a width of 1 mm, and a length of 100 mm to be manufactured as a silicon rod, wherein the resistance value of the P-type silicon rod was 1 ohm. The nano-silicon composite material was manufactured by using a capacitor charged at a voltage of 11 kV The nano-silicon composite material covered with a carbon layer was filtered through a steel mesh, and centrifuged and separated at 11000 rpm, to obtain a slurry of nano-silicon particles.

The slurry was decomposed, dispersed, and graded after subjected to a high-temperature heat treatment under nitrogen atmosphere at 1300 °C for 3 hrs, to prepare a nano-silicon composite material as nano-particle powders.

The nano-silicon composite material was an anode manufactured by anode active substance comprising nano-silicon powders with the weight percentage being at least 5%, with the weight percentage of the anode active substance in the entire anode after mixed with artificial graphite being 80%, the conductive material super P with the weight percentage being 10%, and the binder PVDF with the weight percentage being 10%. The nano-silicon composite material powders as anode active substance were prepared into a coin battery having a diameter of 20 mm and a height of 3.2 mm.

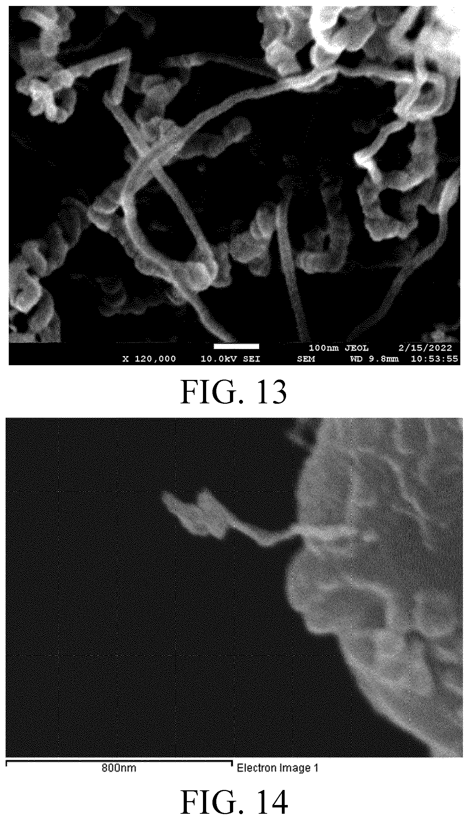

As shown in FIG. 12 and FIG. 13, where FIG. 12 and FIG. 13 are SEM images of an anode active substance manufactured according to Experimental Example 11 in FIG. 6, from the SEM image of the powders in Experimental Example 11, the synthesized nano-silicon powders can be observed, and in addition to the original silicon particles seen, nano-silicon wires that was produced can further be seen.

In Experimental Example 12, the organic solvent in the plasma reaction chamber comprised ethanol and aluminum nitrate, wherein the solid content of the aluminum nitrate in the solvent was 0.05%, and a pair of electrodes made of stainless steel was equipped with. AP-type silicon wafer was cut off at intervals with a thickness of 0.8 mm, a width of 1 mm, and a length of 100 mm to be manufactured as a silicon rod, wherein the resistance value of the P-type silicon rod was 1 ohm. The nano-silicon composite material was manufactured by using a capacitor charged at a voltage of 11 kV The nano-silicon composite material covered with a carbon layer was filtered through a steel mesh, and centrifuged and separated at 11000 rpm, to obtain a slurry of nano-silicon particles.

The slurry was decomposed, dispersed, and graded after subjected to a high-temperature heat treatment under nitrogen atmosphere at 1300 °C for 3 hrs, to prepare a nano-silicon composite material as nano-particle powders.

The nano-silicon composite material was an anode manufactured by anode active substance comprising nano-silicon powders with the weight percentage being at least 5%, with the weight percentage of the anode active substance in the entire anode after mixed with artificial graphite being 80%, the conductive material super P with the weight percentage being 10%, and the binder PVDF with the weight percentage being 10%. The nano-silicon composite material powders as anode active substance were prepared into a coin battery having a diameter of 20 mm and a height of 3.2 mm.

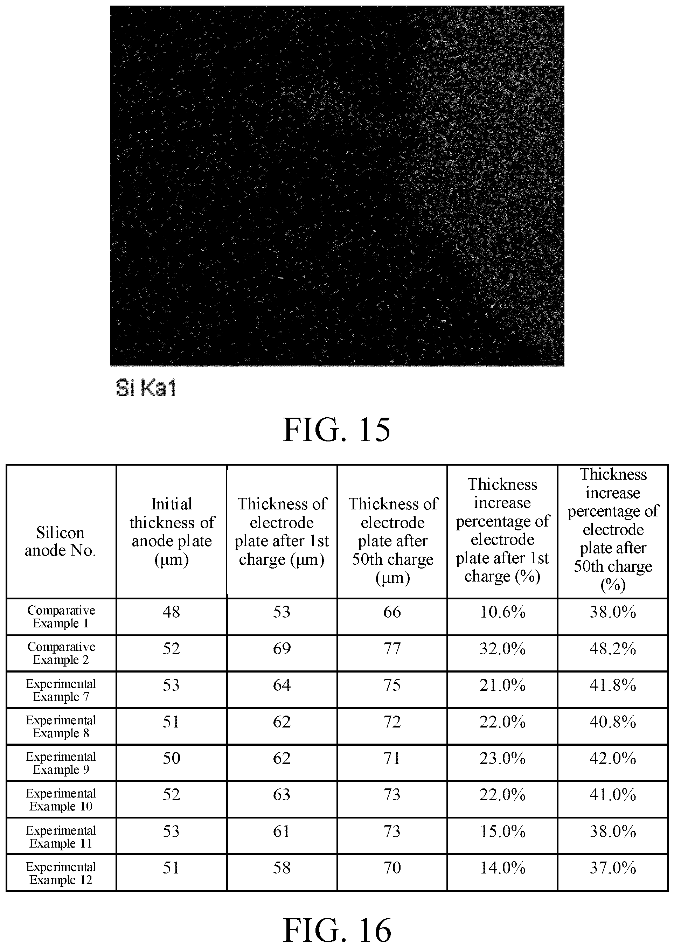

As shown in FIG. 14 and FIG. 15, where FIG. 14 and FIG. 15 are SEM images of an anode active substance manufactured according to Experimental Example 12 in FIG. 6, from the SEM image of the powders in Experimental Example 12, the synthesized nano-silicon powders can be observed, and the existing powders were analyzed by energy-dispersive X-ray spectroscopy (EDS) of SEM and found to be the composition of a silicon material, which can be confirmed to be the production of the nano-wires.

It can be known from Experimental Examples 1 to 12 that the nano-silicon composite material produced after modification of the silicon powders was advantageous over the commercially available silicon powders (Comparative Example 1) in conductivity, charge capacity, discharge capacity, initial discharge efficiency, and cycling efficiency after multiple cycles of charge and discharge. Compared with Comparative Example 2, for the nano-silicon composite material modified by doping, the conductivity of the powders were improved, and the charge capacity of the pure-silicon negative electrode and the discharge capacity of the pure-silicon negative electrode were respectively improved by at least 8% and 13% or higher.

FIG. 16 is specific experimental data related to expansion characteristics of some experimental examples of the present invention. It can be known from the data of various experimental examples shown in FIG. 16 that by using the nano-silicon composite material produced after modification of the silicon powders, the expansion in the anode was further reduced; and if nano-silicon wire was produced in the nano-silicon composite material, the expansion rate of the electrode plate can be further reduced.

The present invention is not limited to the various embodiments described above, and various modifications can be made within the scope defined by the claims. Embodiments obtained by appropriately combining technical means respectively disclosed in different embodiments are also included in the technical scope of the present invention. Further, by combining technical means respectively disclosed in various embodiments, new technical features can be formed.

In addition, it should be noted that any numerical value mentioned in the present invention is not intended to define that the present invention can only be implemented with the specified numerical value. It can be understood by those with ordinary knowledge in the art that each numerical value/component ratio has an allowable error, as long as it does not significantly affect the results/functions to be achieved in each experimental example. Any numerical value close to the disclosed range is deemed to be covered in the disclosed range of the present invention.

### Reference signs in the drawings

10: lithium secondary battery
11: cathode
110: cathode material layer
111: cathode current collector
12: separator
13: anode
130: anode material layer
131: anode current collector
200: composite material
210: silicon particles
220: ceramic material
230: conductive carbon
M1: anode active substance
M2: conductive material
M3: binder
S110~S130, S210~S270: process flow charts of a method for preparing an anode active substance

## Claims

1. An anode active substance (M1) for a secondary battery, **characterized by**, comprising:
a composite material (200) comprising silicon particles (210), a ceramic material (220), and f (230), wherein:
the ceramic material (220) is formed on at least a partial area on the surface of the silicon particles (210), and the conductive carbon (230) is formed on the ceramic material (220) to cover the silicon particles (210) and the ceramic material (220).

2. The anode active substance (M1) for a secondary battery according to claim 1, wherein the ceramic material (220) comprises silicon carbide (SiC).

3. The anode active substance (M1) for a secondary battery according to claim 1, wherein the ceramic material (220) comprises a compound synthesized by silicon, aluminum, oxygen, and nitrogen.

4. The anode active substance (M1) for a secondary battery according to claim 1, wherein a chemical formula of the ceramic material (220) is MₓSi₁₂₋₍ₘ₊ₙ₎Al₍ₘ₊ₙ₎OₙN₁₆₋ₙ,
wherein M is at least one of the following elements or a compound thereof: yttrium (Y), zirconium (Zr), rhodium (Rh), palladium (Pd), lithium (Li), magnesium (Mg), calcium (Ca), barium (Ba), cerium (Ce), neodymium (Nd), europium (Eu), and ytterbium (Yb); and
wherein x=0.01-0.5, m=0.1-2, and n=0.1-3.

5. The anode active substance (M1) for a secondary battery according to claim 1, wherein the composite material (200) is in a powder shape, and a secondary particle size of the composite material (200) is in the range of 1-500 µm.

6. The anode active substance (M1) for a secondary battery according to claim 1, wherein a primary particle size of the composite material (200) is in the range of 5 nm - 1000 nm.

7. The anode active substance (M1) for a secondary battery according to claim 1, wherein the silicon particles (210) comprise at least one of a spherical unit and a linear unit.

8. The anode active substance (M1) for a secondary battery according to claim 7, wherein a diameter of the spherical unit is in the range of 5 nm - 1000 nm, and a diameter of the linear unit is in the range of 2 nm - 40 nm.

9. The anode active substance (M1) for a secondary battery according to claim 8, wherein a thickness of the ceramic material (220) is in the range of 0.1-3 nm.

10. The anode active substance (M1) for a secondary battery according to claim 9, wherein a thickness of the conductive carbon (230) is in the range of 3-10 nm.

11. A lithium secondary battery (10), **characterized by**, comprising:
a cathode (11);
a separator (12); and
an anode (13), the cathode (11) and the anode (13) being arranged at two opposite sides of the separator (12), wherein the anode (13) comprises an anode active substance (M1), and the anode active substance (M1) comprises a composite material (200) consisting of silicon particles (210), a ceramic material (220), and conductive carbon (230).

12. The lithium secondary battery (10) according to claim 11, wherein a weight percentage of the anode active substance (M1) in the anode (13) is at least 70%.

13. A method for preparing an anode active substance (M1), **characterized by**, comprising:
(S110) adding an organic solvent to a reaction chamber, wherein multiple electrodes are arranged in the reaction chamber;
(S120) placing a silicon material in the reaction chamber to contact the organic solvent; and
(S130) applying a voltage to the multiple electrodes, to produce a composite material (200) containing silicon particles (210), a ceramic material (220), and conductive carbon (230).

14. The method for preparing an anode active substance (M1) according to claim 13, wherein the organic solvent comprises an alcohol compound.

15. The method for preparing an anode active substance (M1) according to claim 14, wherein the organic solvent further comprises an aluminum compound.

16. The method for preparing an anode active substance (M1) according to claim 14, wherein the organic solvent further comprises a flux.

17. The method for preparing an anode active substance (M1) according to claim 16, wherein a composition of the flux comprises any one of the following elements or a compound thereof: yttrium, zirconium, rhodium, palladium, lithium, magnesium, calcium, barium, cerium, neodymium, europium, and ytterbium.

18. The method for preparing an anode active substance (M1) according to claim 13, further comprising:
(S250) filtering the composite material (200); and
(S270) subjecting the filtered composite material (200) to a heat treatment.

19. The method for preparing an anode active substance (M1) according to claim 18, wherein the heat treatment comprises the following step:
heating the composite material (200) at a heating temperature of 900-1500 °C in a non-reactive environment, to produce the composite material (200) in a powder shape.

20. The method for preparing an anode active substance (M1) according to claim 19, wherein the heating temperature is in the range of 1200-1500 °C.
